# EUROPÄISCHE PATENTSCHRIFT

(11) **EP 0 614 789 B1**
(45) Veröffentlichungstag und Bekanntmachung des Hinweises auf die Patenterteilung: **19.06.1996**
(21) Anmeldenummer: 94102884.7
(22) Anmeldetag: 25.02.1994
(51) Int. Cl.: B60R 22/46, B60R 22/28, F16F 7/12

(54) **Gurtstraffer in einem Sicherheitsgurtsystem für Fahrzeuge**
Pretensioner for seat belt systems for vehicles
Prétendeur pour systèmes de ceinture de sécurité pour véhicules

(30) Priorität: 06.03.1993 DE 9303276 U
(43) Veröffentlichungstag der Anmeldung: 14.09.1994
(73) Patentinhaber: TRW Occupant Restraint Systems GmbH, D-73553 Alfdorf (DE)
(72) Erfinder: Föhl, Artur, D-73614 Schorndorf (DE)
(74) Vertreter: Degwert, Hartmut, Dipl.-Phys.

(56) Entgegenhaltungen:
- DE-A- 3 727 666
- DE-A- 4 104 244
- FR-A- 1 458 873
- GB-A- 2 129 496

## Beschreibung

Die Erfindung betrifft einen Gurtstraffer für Fahrzeug-Sicherheitsgurtsysteme, mit einem pyrotechnischen Gasgenerator und einer Kolben/Zylinder-Einheit, deren Kolben an einem ersten Ende des Zylinders angeordnet sowie mit einem Zugseil verbunden ist und durch den vom Gasgenerator erzeugten Gasdruck zum zweiten, eine Verengung aufweisenden Ende des Zylinders beschleunigt wird.

Es ist aus der gattungsbildenden DE-A-4104244 bekannt, bei pyrotechnischen Linearantrieben einen Bereich vor dem zweiten, vom Gasgenerator entfernt gelegenen Zylinderende kegelförmig im Querschnitt zu verjüngen. Dieser Bereich wirkt dadurch als Kolbenfangsicherung, wenn der Kolben in diesen Endbereich eintritt, insbesondere dann, wenn der Sicherheitsgurt nicht benutzt wird oder das Zugseil reißt. In diesem Fall wird der infolge des vom Gasgenerator erzeugten Gasdrucks beschleunigte Kolben durch Verformen dieses Zylinderbereichs abgebremst. Auf diese Weise wird vermieden, daß der Kolben den Zylinder verläßt. Der Zylinder und der Kolben bestehen in der Regel aus gepreßtem Aluminium.

Zur Steigerung der Schutzwirkung von Sicherheitsgurtsystemen werden neuerdings pyrotechnische Linearantriebe für die Gurtstraffung mit höheren pyrotechnischen Leistungen eingesetzt. Durch die leistungsstärkeren Linearantriebe wurden auch die auf den Zylinder wirkenden Kräfte beim Abbremsen des Kolbens erhöht. Insbesondere bei Auslösung des Gasgenerators bei einem nicht benutzten Sicherheitsgurt würde die Kolbenenergie nunmehr ausreichen, den als Kolbenfangsicherung dienenden, kegelförmig verjüngten Endbereich aufzuweiten, so daß der Kolben aus dem den Zylinder austreten könnte.

Der Erfindung liegt die Aufgabe zugrunde, einen Gurtstraffer mit den eingangs erwähnten Merkmalen so zu verbessern, daß eine sichere Abbremsung des Kolbens auch bei erhöhter Leistung des Gasgenerators gewährleistet ist.

Diese Aufgabe wird erfindungsgemäß in Verbindung mit den Oberbegriffsmerkmalen des Schutzanspruchs 1 dadurch gelöst, daß ein hülsenförmiges Einsatzteil im Zylinder angeordnet ist und die Verengung einen Anschlag für das hülsenförmige Einsatzteil bildet, wobei die Innenmantelfläche und/oder die Außenmantelfläche des Einsatzteils profiliert ausgebildet ist.

Der Erfindung liegt die Erkenntnis zugrunde, daß selbst die in Extremfallen wie bei unbenutztem Gurt und erhöhter Generatorleistung auftretende, hohe kinetische Energie des Kolbens vollständig am Zylinderende absorbiert werden kann, wenn ein großes Materialvolumen zur plastischen Verformung zur Verfügung steht. Dieses Volumen kann durch die Profilierung des Einsatzteils bereitgestellt werden. Es entstehen dann Freiräume, in die das plastisch verformte Material verdrängt werden kann. Durch Anordnen des Einsatzteils im Zylinder läßt sich die Abbremsung des Kolbens in vielerlei Hinsicht fertigungstechnisch einfach und anwendungsgerecht optimal verwirklichen, ohne den funktionsbedingt vorgegebenen Aufbau des Zylinders ändern zu müssen.

Die Bremswirkung kann durch die Form des Einsatzteils optimiert werden. Eine gezielte, den auftretenden Kräften gerecht werdende plastische Verformung wird dadurch ermöglicht, daß die Außen- und/oder Innenmantelfläche des Einsatzteils profiliert ausgebildet wird, wodurch die gezielte Verformung beim Einschlagen des Kolbens bzw. beim Anschlagen des Einsatzteils gegen die Verengung des Zylinders eintritt. Die Profilierung wird entsprechend den maximal auf das Einsatzteil einwirkenden Kräften und für eine sichere gesteuerte plastische Verformung des Einsatzteils ausgelegt.

Eine vorteilhafte Ausführungsform besteht darin, daß die Profilierung durch Rippen und/oder Nuten in der Innenmantel- und/oder Außenmantelfläche des Einsatzteils gebildet ist.

Die Bremswirkung des Einsatzteils auf den Kolben kann ferner durch geeignete Werkstoffwahl optimiert werden, ohne daß die Festigkeitseigenschaften des Zylinders beeinträchtigt werden. Die Schmelztemperatur des Werkstoffs des Einsatzteils sollte über der Selbstzündungstemperatur des pyrotechnischen Gasgenerators liegen. Dies kann beispielsweise durch einen metallischen, weichlotähnlichen Werkstoff wie eine Zinnlegierung erreicht werden. Dadurch bleibt beispielsweise bei einem Fahrzeugbrand die Bremswirkung des Einsatzteils auf den Kolben erhalten, wenn infolge der Hitzeeinwirkung der Gasgenerator gezündet wird und der Kolben ungebremst in das Einsatzteil einschlägt.

Des weiteren kann die Bremswirkung auf den Kolben durch das Einsatzteil auch dadurch erhöht werden, daß der Kolben als Eindringkörper ausgebildet ist, dessen Querschnitt sich von dem auf das Einsatzteil gerichteten Ende des Kolbens in Richtung auf sein anderes Ende vergrößert. Zweckmäßig ist es dabei, wenn der Kolben zumindest bereichsweise kegel- bzw. kegelstumpfförmig ausgebildet ist.

Weitere Merkmale und Vorteile der Erfindung ergeben sich aus der folgenden Beschreibung und aus der Zeichnung, auf die Bezug genommen wird. Es zeigen:
Fig. 1 eine Querschnittsansicht durch einen pyrotechnischen Kolben/Zylinder-Linearantrieb eines Gurtstraffers gemäß einer ersten Ausführungsform;
Fig. 2 eine Querschnittsansicht durch einen pyrotechnischen Kolben/Zylinder-Linearantrieb eines Gurtstrafffers gemäß einer zweiten Ausführungsform;
Fig. 3a bis 5a jeweils eine perspektivische Darstellung einer Ausführungsform eines Einsatzteils gemäß der Erfindung;
Fig. 3b bis 5b jeweils eine Querschnittsansicht durch die Ausführungsform des Einsatzteils von Fig. 3a, 4a bzw. 5a; und
Fig. 6 eine Teilquerschnittsansicht durch einen Zylinder mit einem Einsatzteil gemäß einer weiteren Ausführungsform der Erfindung.

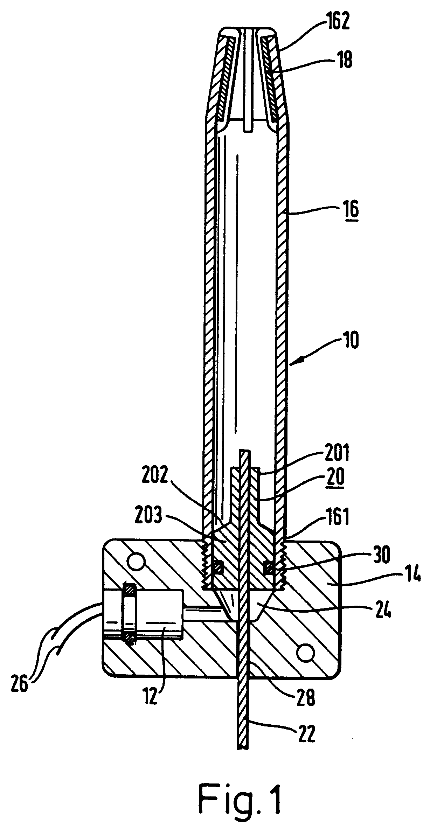

In Fig. 1 ist in einer Querschnittsansicht ein Kolben/Zylinder-Linearantrieb 10 eines Gurtstraffers für Fahrzeugsicherheitsgurtsysteme dargestellt. Der Kolben/Zylinder-Linearantrieb 10 besteht aus einem Gasgenerator 12, einem Gehäuseblock 14, in dem der Gasgenerator 12 in einer entsprechenden Ausnehmung angeordnet ist, einem Zylinder 16, ein hülsenförmiges Einsatzteil, das als Kolbenbremse 18 wirkt, und einem in dem Zylinder 16 verschiebbar gelagerten Kolben 20, an dem ein Zugseil 22 angeschlossen ist.

Der Zylinder 16 ist an seinem ersten Ende mit einem Gewinde versehen und in eine entsprechende Ausnehmung mit Gewinde in dem Gehäuseblock 14 eingeschraubt. Der Kolben 20 ist in Ruhestellung beim ersten Ende 161 des Zylinders 16 angeordnet. An den Kolben 20 schließt sich eine Druckkammer 24 an, die mit dem Aufnahmeraum des elektrisch zündbaren Gasgenerators 12 verbunden ist. Für die elektrische Zündung des Gasgenerators 12 sind zwei Leitungen 26 an die Zündvorrichtung des Gasgenerators 12 angeschlossen, die mit einem von einem Sensor auslösbaren, hier nicht dargestellten Signalgeber verbunden sind. Anstelle einer elektrischen Zündvorrichtung für den Gasgenerator 12 kann auch eine andere Zündvorrichtung verwendet werden, wie eine mechanische Zündvorrichtung.

Durch die Druckkammer 24 und durch eine dem Querschnitt des Zugseils 22 im wesentlichen angepaßte Bohrung 28 in dem Gehäuseblock 14 ist das Zugseil 22 hindurchgeführt. Das Zugseil 22 kann zur Gurtstraffung in bekannter Weise aneinem hier nicht dargestellten Gurtaufroller oder an einem ebenfalls hier nicht dargestellten Gurtschloß für die Gurtstraffung angreifen.

Vor dem zweiten freien Ende 162 des Zylinders 16 verkleinert sich der Querschnitt des Zylinders 16 über einen bestimmten Bereich in Richtung auf das zweite Ende 162 des Zylinders 16, so daß der Endbereich des Zylinders 16 kegelstumpfförmig ausgebildet ist. In diesem Endbereich des Zylinders 16 ist die Kolbenbremse 18 angeordnet. Sie hat eine Umhüllende, die im wesentlichen der Innenmantelfläche des Zylinders 16 entspricht. Die Kolbenbremse 18 ragt durch das offene kegelstumpfförmige Ende 162 des Zylinders 16 hinaus und ist nach außen umgebogen. Dadurch ist die Kolbenbremse 18 in beide Axialrichtungen fixiert. In Richtung auf das erste Ende 161 des Zylinders 16 ist die Kolbenbremse 18 dadurch fixiert, daß sie in der oben genannten Art und Weise durch das offene kegelstumpfförmige Ende 162 des Zylinders 16 hinausragt und umgebogen ist. In die entgegengesetzte Richtung ist die Kolbenbremse 18 dadurch gesichert, daß der Zylinder 16 sich kegelförmig verjüngt und somit als Anschlag für die Kolbenbremse 18 bei entsprechender Belastung dient. Die Querschnittsfläche des Hohlraums der Kolbenbremse 18 beim zweiten Ende 162 des Zylinders 16 verkleinert sich ebenfalls in Richtung auf das zweite Ende 162 des Zylinders.

Die Kolbenbremse 18 besteht aus einem metallischen weichlotähnlichen Werkstoff, wie einer Zinnlegierung. Der Schmelzpunkt des Werkstoffs liegt über der Selbstzündungstemperatur des Gasgenerators 12, so daß die Bremswirkung der Kolbenbremse 18 auf den Kolben 20 auch bei Hitzeeinwirkung und durch diese ausgelöste Zündung des Gasgenerators, wie in einem Brandfalle, erhalten bleibt.

Der Kolben 20 ist fest mit dem Zugseil 22 verpreßt und weist eine Dichtung 30 auf, damit der für den Straffervorgang erzeugte Gasdruck nahezu verlustfrei auf den Kolben 20 einwirken kann. Der Kolben 20 hat an seinem vorderen Ende einen hülsenförmigen zusammengepreßten Ansatz 201. Der hülsenförmige Ansatz 201 ist über einen konischen Bereich 202 mit dem übrigen Kolbenteil 203 verbunden. Durch diese Ausbildung des Kolbens 20 wird sein Eingreifen in die Kolbenbremse 18 erleichtert und eine einfache Verbindung mit dem Zugseil 22 durch Verpressen ermöglicht. Der Kolben 20 ist somit als Eindringkörper ausgebildet. Beim Auftreffen des Kolbens 20 mit seinem zylindrischen, hülsenförmigen Ansatz 201, dem konischen Übergang 202 und dem übrigen Kolbenteil 203 auf die Kolbenbremse 18 wird die Kolbenbremse 18 so stark plastisch verformt, daß sie der Gegenkontur der Kolbenabschnitte 201 und 202 angepaßt ist. Die Kolbenbremse 18 wird dabei - wie oben bereits erwähnt - durch die Verengung des Zylinders 16 gehalten.

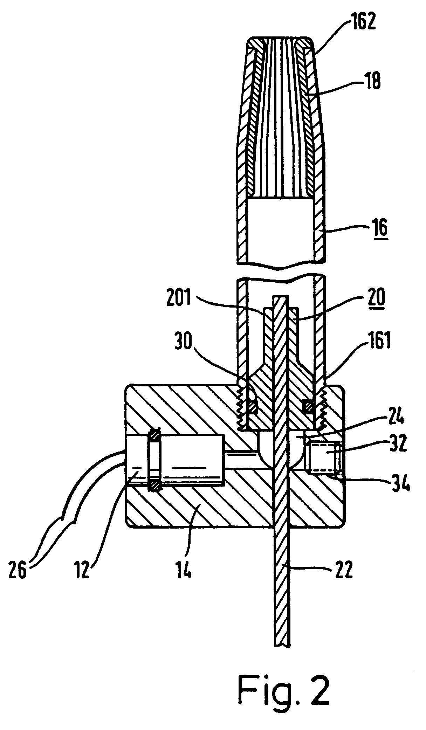

In Fig. 2 ist eine weitere Ausführungsform gemäß der Erfindung dargestellt.

Die Ausführungsform entspricht im wesentlichen der Ausführungsform von Fig. 1. Sie unterscheidet sich lediglich dadurch, daß ein Stopfen 32 in eine Bohrung 34 angebracht ist. Der Stopfen 32 besteht aus einem Werkstoff, dessen Schmelztemperatur oberhalb des Betriebstemperaturbereichs des Gasgenerators 12 liegt und höchstens gleich der Selbstzündungstemperatur des Gasgenerators 12 ist. Der Stopfen 32 erweicht bei Hitzeeinwirkung wie beispielsweise in einem Brandfalle, und gibt bei Zündung des Gasgenerators 12 die Bohrung 34 frei, so daß keine gefährlich hohen Gasdrücke in der Druckkammer auftreten können.

Weiterhin ist die Kolbenbremse 18 bei dieser Ausführungsform derart in bezug auf die Ausführungsform gemäß Fig. 1 verlängert ausgebildet, daß sich die Kolbenbremse 18 über den kegelstumpfförmigen Bereich des Zylinderes 16 hinaus in Richtung auf das erste Ende 161 des Zylinders 16 erstreckt.

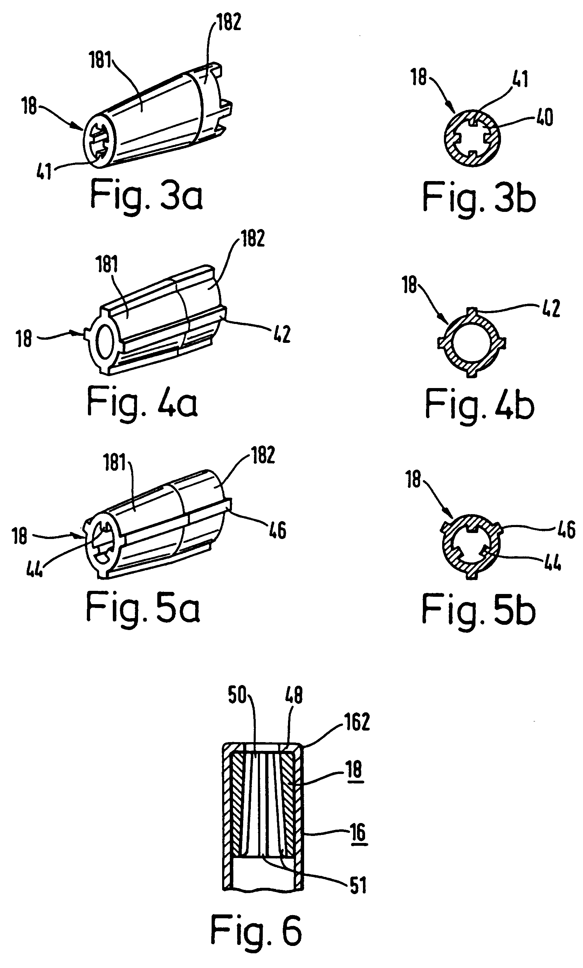

Weitere Ausführungsformen einer Kolbenbremse 18 sind in den Fig. 3a bis 5b dargestellt. Dabei zeigen die Fig. 3a, 4a und 5a jeweils eine perspektivische Ansicht einer Ausführungsform der Kolbenbremse 18 und die Fig. 3b, 4b und 5b die entsprechenden Querschnitte der Ausführungsformen der Fig. 3a, 4a bzw. 5a. Die Kolbenbremse 18 gemäß den Fig. 3a bis 5a hat einen kegelförmigen Bereich 181 und einen sich daran anschließenden zylindrischen Bereich 182. Diese Bereiche sind der Innenmantelfläche des Zylinders 16 an seinem zweiten Ende 162 angepaßt. Alle diese Ausführungsformen der Kolbenbremse 18 enden mit dem Zylinder 16 bei seinem zweiten Ende 162. Zur axialen Fixierung in Richtung auf das erste Ende 161 des Zylinders 16 ist die Kolbenbremse 18 jeweils mit dem Zylinder 16 festgelegt.

Die Ausführungsform gemäß den Fig. 3a und 3b weist in der Innenmantelfläche der Kolbenbremse 18 Nuten 40 und Rippen 41 auf, die sich durch die Kolbenbremse 18 hindurch erstrecken und geneigt zur Axialrichtung verlaufen.

Die Ausführungsform gemäß den Fig. 4a und 4b weist an der Außenmantelfläche Rippen 42 auf, die ebenfalls geneigt zur Axialrichtung verlaufen.

Die weitere Ausführungsform gemäß den Fig. 5a und 5b weist in der Innenmantelfläche Rippen 44 und in der Außenmantelfläche Rippen 46 auf. Die Rippen 44 und 46 verlaufen ebenfalls geneigt zur Axialrichtung.

Die Zähl und die Größe sowie die Form der Rippen 41, 42, 44, 46 und der Nuten 40 können entsprechend der Stärke des Gasgenerators 12 und somit der zu erwartenden auftretenden Kräfte beim Einschlagen des Kolbens 16 in die Kolbenbremse 18 variiert werden.

In Fig. 6 ist eine Teilschnittdarstellung einer weiteren Ausführungsform einer Kolbenbremse 18 in einem Zylinder 16 dargestellt. Der Zylinder 16 weist hierbei kein kegelstumpfförmiges zweites Ende 162 auf, sondern einen über seine axiale Erstreckung konstanten Querschnitt. Am zweiten Ende 162 ist lediglich die Zylinderwandung senkrecht einwärts gebogen, so daß ebenfalls ein Anschlag 48 zur axialen Fixierung der Kolbenbremse 18 gebildet wird. Dementsprechend ist die Außenmantelfläche der Kolbenbremse 18 der Innenmantelfläche des Zylinders 16 angepaßt. Wie in den anderen Ausführungsformen auch verjüngt sich die Innenmantelfläche der Kolbenbremse 18 in Richtung auf das zweite Ende 162 des Zylinders 16 kegelförmig. Bei dieser Ausführungsform sind aber lediglich in der Innenmantelfläche der Kolbenbremse 18 Nuten 50 eingearbeitet und Rippen 51 vorgesehen. Die Außenmantelfläche weist dagegen keine Erhebungen und/oder Vertiefungen auf. Die Kolbenbremse 18 kann durch Einpressen oder Einkleben im Zylinder fixiert sein.

Durch die Profilierung der Innen- und/oder Außenmantelfläche der Kolbenbremse 18 kann allgemein die plastische Verformung der Kolbenbremse 18 beeinflußt und somit die Bremswirkung beim Einschlagen des Kolbens 20 einfach eingestellt werden, so daß eine sichere Abbremsung des Kolbens 20 auch bei erhöhter Leistung des Gasgenerators gewährleistet ist. Selbstverständlich muß die Kolbenbremse 18 nicht im Endbereich des Zylinders 16 angeordnet sein, sondern kann an jeder Stelle zwischen der Verengung des Zylinders 16 und dem Kolben 20 vorgesehen werden. In diesem Falle würde die Kolbenbremse 18 durch den Kolben 18 bis zum Ende 162 des Zylinders 16 mitgenommen werden. Dort würde schließlich die Abbremsung des Kolbens 20 und die Verformung der Kolbenbremse 18 stattfinden.

Wie aus den beschriebenen Ausführungsformen ersichtlich ist, kann die Bremswirkung der Kolbenbremse 18 unabhängig von der funktionsbedingten Konstruktion des Zylinders 16 durch Formgebung und Werkstoffwähl anwendungsgerecht optimal eingestellt werden.

## Patentansprüche

1. Gurtstraffer für Fahrzeug-Sicherheitsgurtsysteme, mit einem pyrotechnischen Gasgenerator (12) und einer Kolben/Zylinder-Einheit (16, 20), deren Kolben (20) an einem ersten Ende (161) des Zylinders (16) angeordnet sowie mit einem Zugseil (22) verbunden ist und durch den vom Gasgenerator (12) erzeugten Gasdruck zum zweiten, eine Verengung aufweisenden Ende (162) des Zylinders (16) beschleunigt wird, **dadurch gekennzeichnet**, daß ein hülsenförmiges Einsatzteil (18) im Zylinder (16) angeordnet ist und die Verengung einen Anschlag für das hülsenförmige Einsatzteil (18) bildet, wobei die Innenmantelfläche und/oder die Außenmantelfläche des Einsatzteils (18) profiliert ausgebildet ist.

2. Gurtstraffer nach Anspruch 1, **dadurch gekennzeichnet**, daß die Schmelztemperatur des Werkstoffs des Einsatzteils (18) über der Selbstzündungstemperatur des pyrotechnischen Gasgenerators (12) liegt.

3. Gurtstraffer nach Anspruch 2, **dadurch gekennzeichnet**, daß das Einsatzteil (18) aus einem metallischen weichlotähnlichen Werkstoff besteht.

4. Gurtstraffer nach Anspruch 2 und 3, **dadurch gekennzeichnet**, daß das Einsatzteil (18) aus einer Zinnlegierung besteht.

5. Gurtstraffer nach einem der vorangehenden Ansprüche, **dadurch gekennzeichnet**, daß der Kolben (20) als Eindringkörper ausgebildet ist, dessen Querschnitt sich von dem auf das Einsatzteil (18) gerichteten Ende des Kolbens (20) in Richtung auf sein anderes Ende vergrößert.

6. Gurtstraffer nach Anspruch 5, **dadurch gekennzeichnet**, daß der Kolben (20) zumindest bereichsweise kegel- bzw. kegelstumpfförmig ausgebildet ist.

7. Gurtstraffer nach einem der vorangehenden Ansprüche, **dadurch gekennzeichnet**, daß die Profilierung durch Rippen (41, 42, 44, 46, 51) und/oder Nuten (40, 50) in der Innenmantel- und/oder Außenmantelfläche des Einsatzteils (18) gebildet ist.

8. Gurtstraffer nach einem der vorangehenden Ansprüche, **dadurch gekennzeichnet**, daß die Umhüllende des Einsatzteils (18) im Querschnitt im wesentlichen dem Innenmantel des Zylinders (16) bei dem zweiten Ende (162) entspricht.

9. Gurtstraffer nach einem der vorangehenden Ansprüche, **dadurch gekennzeichnet**, daß die Verengung des Zylinders (16) kegelstumpfförmig ausgebildet ist.

## Claims

1. A belt pretensioner for vehicle safety belt systems, comprising a pyrotechnic gas generator (12) and a piston and cylinder unit (16, 20), whose piston (20) is arranged at a first end (161) of the cylinder (16), and furthermore is connected with a cable (22) and by means of the gas pressure produced by the gas generator (12) is accelerated towards the second end (162) of the cylinder (16), which has a constriction, characterized in that a sleeve-like insert (18) is arranged in the cylinder (16) and the constriction constitutes an abutment for the sleeve-like insert (18), the inner enveloping surface and/or the outer enveloping surface of the insert (18) having a profiled cross section.

2. The belt pretensioner as claimed in claim 1, characterized in that the fusion temperature of the material of the insert (18) is above the self-ignition temperature of the pyrotechnic gas generator (12).

3. The belt pretensioner as claimed in claim 2, characterized in that the insert (18) consists of a metallic solder-like material.

4. The belt pretensioner as claimed in claim 2 and in claim 3, characterized in that the insert (18) consists of a tin alloy.

5. The belt pretensioner as claimed in any one of the preceding claims, characterized in that the piston (20) is designed in the form of a penetration body, whose cross section increases from the end of the piston (20) facing the insert (18) towards the other end thereof.

6. The belt pretensioner as claimed in claim 5, characterized in that the piston (20) is at least in part designed to be conical or frustoconical.

7. The belt pretensioner as claimed in any one of the preceding claims, characterized in that said profiled section comprises ridges (41, 42, 44, 46, 51) and/or grooves (40, 50) on the inner enveloping surface and/or the outer enveloping surface of the insert (18).

8. The belt pretensioner as claimed in any one of the preceding claims, characterized in that an enveloping surface of the insert (18) essentially corresponds to the inner surface of the cylinder (16) at the second end (162).

9. The belt pretensioner as claimed in any one of the preceding claims, characterized in that the constriction of the cylinder (16) is frustoconical.

## Revendications

1. Tendeur de ceinture pour des systèmes de ceintures de sécurité destinées à des véhicules, avec un générateur pyrotechnique de gaz (12) et avec une unité piston-cylindre (16, 20), dont le piston (20) est disposé sur une première extrémité (161) du cylindre (16), est relié à un câble de traction (22) et est propulsé par la pression du gaz, produite par le générateur de gaz (12), en direction de la seconde extrémité (162) du cylindre (16), qui présente un rétrécissement, tendeur de ceinture caractérisé en ce que l'on dispose un insert (18) en forme de manchon dans le cylindre (16) et en ce que le rétrécissement forme une butée pour l'insert (18) en forme de manchon, la surface-enveloppe intérieure et/ou la surface-enveloppe extérieure de l'insert (18) étant constituée de manière profilée.

2. Tendeur de ceinture selon la revendication 1, caractérisé en ce que la température de fusion de la matière de l'insert (18) se situe au-desssus de la température d'auto-allumage du générateur pyrotechnique de gaz (12).

3. Tendeur de ceinture selon la revendication 2, caractérisé en ce que l'insert (18) consiste en une matière métallique analogue à un métal d'apport de brasage tendre.

4. Tendeur de ceinture selon les revendications 2 et 3 caractérisé en ce que l'insert (18) consiste en un alliage à base d'étain.

5. Tendeur de ceinture selon l'une des revendications précédentes, caractérisé en ce que le piston (20) est constitué sous la forme d'un corps d'enfoncement, dont la section transversale va en s'agrandissant en partant de l'extrémité du piston (20) tournée vers l'insert (18) en direction de son autre extrémité.

6. Tendeur de ceinture selon la revendication 5, caractérisé en ce que le piston (20) est constitué au moins localement en forme de cône ou de tronc de cône.

7. Tendeur de ceinture selon l'une des revendications précédentes, caractérisé en ce que le profilage est réalisé au moyen de cannelures (41, 42, 44, 46, 51) et/ou de rainures (40, 50) dans la surface-enveloppe intérieure et/ou dans la surface-enveloppe extérieure de l'insert (18).

8. Tendeur de ceinture selon l'une des revendications précédentes, caractérisé en ce que l'enveloppe de l'insert (18) correspond en section transversale sensiblement à l'envelope intérieure du cylindre (16) à la seconde extrémité (162).

9. Tendeur de ceinture selon l'une des revendications précédentes, caractérisé en ce que le rétrécissement du cylindre (16) est constitué sous la forme d'un tronc de cône.
